# EUROPEAN PATENT APPLICATION

(11) **EP 1 316 459 A1**
(43) Date of publication of application: **04.06.2003**
(21) Application number: 01000688.0
(22) Date of filing: 30.11.2001
(51) Int. Cl.: B60K 6/04, B60K 41/00

(54) **Method and arrangement for calibrating a hybrid electric vehicle**

(71) Applicant: Ford Global Technologies, Inc., Dearborn, Michigan 48126 (US)
(72) Inventor: Lasson, Anders, 41651, Goteborg (SE); Lennevi, Jerker, 44351, Lerum (SE)
(74) Representative: Messulam, Alec Moses

(57) **Abstract**

A method for calibrating and synchronizing sensed operating torques of an engine 511 and a generator 532 in a planetary gear based hybrid electric vehicle 10 is disclosed.

The method includes providing a sensor that detects the operational torque of the engine 511 and a sensor that detects the operational torque of the generator 532, operating a planetary gear system 535 so that the generator 532 is directly linked to the engine 511 and a reading of the sensor that detects the operational torque of the generator 532 may be used to compute the operating torque of the engine 511, arithmetically processing the outputs from the sensors to produce a computed average calibrating value for subsequent use in controlling the engine 511 and the generator 532 during transition between a power-split mode and parallel mode of the planetary gear system 535 so as to synchronise the engine 511 with the generator 532.

## Description

The present invention relates to hybrid electric vehicles and in particular to matching engine and generator torques in a hybrid electric vehicle.

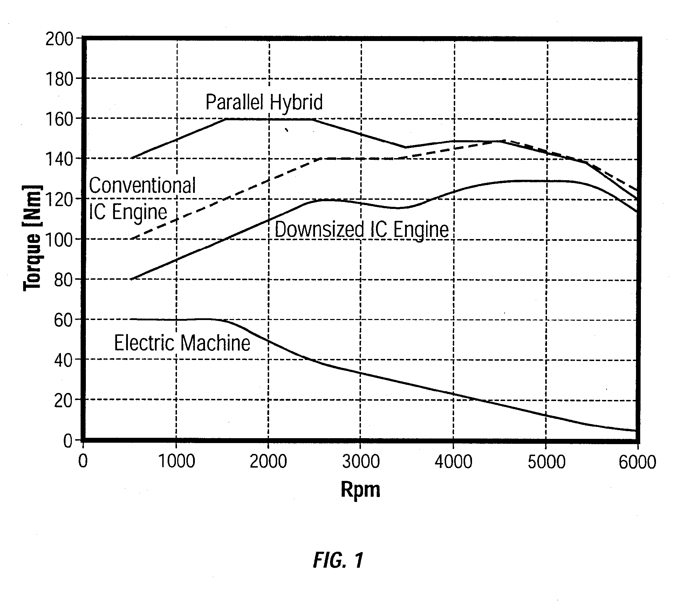

Generally, a hybrid electric vehicle combines electric propulsion with traditional internal combustion engine propulsion to achieve enhanced fuel economy and/or lower exhaust emissions. Electric propulsion has typically been generated through the use of batteries and electric motors. Such an electric propulsion system provides the desirable characteristics of high torque at low speeds, high efficiency, and the opportunity to recapture otherwise lost braking energy. Propulsion from an internal combustion engine provides high energy density, and enjoys an existing infrastructure and lower costs due to economies of scale. By combining the two propulsive systems with a proper control strategy, the result is a reduction in the use of each device in its less efficient range. Furthermore, and as shown in Figure 1 regarding a parallel hybrid configuration, the combination of a downsized engine with an electric propulsion system into a minimal hybrid electric vehicle results in a better utilization of the engine, which improves fuel consumption. Furthermore, the electric motor and battery can compensate for reduction in the engine size.

In typical configurations, the combination of the two types of propulsion systems (internal combustion and electric) is usually characterized as either series or parallel hybrid systems. In a pure series hybrid propulsion system, only the electric motor(s) are in direct connection with the drive train and the engine is used to generate electricity which is fed to the electric motor(s). The advantage of this type of system is that the engine can be controlled independently of driving conditions and can therefore be consistently run in its optimum efficiency and low emission ranges. A key disadvantage to the series arrangement is the loss in energy experienced because of the inefficiencies associated with full conversion of the engine output to electricity.

In a pure parallel hybrid propulsion system, both the engine and the electric motor(s) are directly connected to the drive train and either one may independently drive the vehicle. Because there is a direct mechanical connection between the engine and the drive train in a parallel hybrid propulsion system, less energy is lost through conversion to electricity compared to a series hybrid propulsion system. The operating point for the engine, however, can not always be chosen with full freedom.

The two hybrid propulsion systems can be combined into either a switching hybrid propulsion system or a power-split hybrid propulsion system. A switching hybrid propulsion system typically includes an engine, a generator, a motor and a clutch. The engine is typically connected to the generator. The generator is connected through a clutch to the drive train. The motor is connected to the drive train between the clutch and the drive train. The clutch can be operated to allow series or parallel hybrid propulsion.

A power-split hybrid system, as is exemplarily employed with respect to the present invention, includes an engine, a generator and a motor. The engine output is "split" by a planetary gear set into a series path from the engine to the generator and a parallel path from the engine directly to the power train. In a power-split hybrid system, the engine speed can be controlled by varying the power split to the generator by way of the series path, while maintaining the mechanical connection between the engine and drive train through the parallel path. The motor augments the engine on the parallel path in a similar manner as a traction motor in a pure parallel hybrid propulsion system, and provides an opportunity to use energy directly through the series path, thereby reducing the losses associated with converting the electrical energy into, and out of chemical energy at the battery.

In a typical power-split hybrid system, the generator is usually connected to the sun gear of the planetary gear set. The engine is connected to the planetary carrier and the output gears (usually including an output shaft and gears for interconnection with the motor and the wheel-powering, final drive train) are connected to the ring gear. In such a configuration, the power-split hybrid system can generally be operated in four different modes; one electric mode and three hybrid modes.

In the electric mode, the power-split hybrid system propels the vehicle utilizing only stored electrical energy and the engine is turned off. The tractive torque is supplied from the motor, the generator, or a combination of both. This is the preferred mode when the desired power is low enough that it can be produced more efficiently by the electrical system than by the engine and when the battery is sufficiently charged. This is also a preferred mode for reverse driving because the engine cannot provide reverse torque to the power train in this configuration.

In the parallel hybrid mode, the engine is operating and the generator is locked. By doing this, a fixed relationship between the speed of the engine and the vehicle speed is established. The motor operates as either a motor to provide tractive torque to supplement the engine's power, or can be operated to produce electricity as a generator. This is a preferred mode whenever the required power demand requires engine operation and the required driving power is approximately equal to an optimized operating condition of the engine. This mode is especially suitable for cruising speeds exclusively maintainable by the small internal combustion engine fitted to the hybrid electric vehicle.

In a positive split hybrid mode, the engine is on and its power is split between a direct mechanical path to the drive train and an electrical path through the generator. The engine speed in this mode is typically higher than the engine speed in the parallel mode, thus deriving higher engine power. The electrical energy produced by the generator can flow to the battery for storage or to the motor for immediate utilization. In the positive split mode, the motor can be operated as either a motor to provide tractive torque to supplement the engine's power or to produce electricity to supplement the generator. This is the preferred mode whenever high engine power is required for tractive powering of the vehicle, such as when high magnitude acceleration is called for, as in passing or uphill ascents. This is also a preferred mode when the battery is charging.

In a negative split hybrid mode, the engine is in operation and the generator is being used as a motor against the engine to reduce its speed. Consequently, engine speed, and therefore engine power, are lower than in parallel mode. If needed, the motor can also be operated to provide tractive torque to the drive train or to generate electricity therefrom. This mode is typically never preferred due to increased losses at the generator and planetary gear system, but will be utilized when engine power is required to be decreased below that which would otherwise be produced in parallel mode. This situation will typically be brought about because the battery is in a well charged condition and/or there is low tractive power demand. In this regard, whether operating as a generator or motor, the toque output of the generator is always of the same sense (+/-); that is, having a torque that is always directionally opposed to that of the engine. The sign of the speed of the generator, however, alternates between negative and positive values depending upon the direction of rotation of its rotary shaft, which corresponds with generator vs. motor modes. Because power is dependent upon the sense of the speed (torque remains of the same sense), the power will be considered to be positive when the generator is acting as a generator and negative when the generator is acting as a motor.

When desiring to slow the speed of the engine, the current being supplied to the generator is changed causing the speed of the generator to slow. Through the planetary gear set, this in turn slows the engine. This effect is accomplished because the resistive force acting against the torque of the generator is less at the engine than at the drive shaft which is connected to the wheels and is being influenced by the entire mass of the vehicle. It should be appreciated that the change in speed of the generator is not equal, but instead proportional to that of the engine because of gearing ratios involved within the connection therebetween.

In electric and hybrid electric vehicles, large capacity electricity storage device(s), usually in the form of battery packs, are required. By conventional design, these batteries include a plurality of cylindrical battery cells that are collectively utilized to obtain sufficient performance and range in the vehicle. Typically, batteries are positioned within the vehicle in a compartment configured to protect against damage and to prevent the cells, and mostly their acidic contents, from causing injury or damage, especially in the event of a crash. When stored in these typically confined compartment(s), heat build-up generated from use and/or charging affects the endurance of the batteries, and in some circumstances can destroy individual battery cells. Traditional cooling of the batteries and the battery compartment requires increasing the volume of the compartment for air cooling and/or running cooling hoses to external radiators.

Typically, to achieve a smooth engine start in a hybrid electric vehicle in which the engine is mechanically interconnected with the drive wheels, the start of engine fuel injection and ignition are made at revolutionary speeds above any mechanical resonance speeds of the drive train. Additionally, at full take-off acceleration, any delay in the engine's production of power typically decreases engine performance. Still further, to achieve smooth driving characteristics and obtain low fuel consumption, the engine torque and speed change rates must be limited. At full take-off, this usually results in an increased time period for the engine to reach maximum power, and all of these conditions deteriorate acceleration performance of the vehicle.

As can be appreciated, the engine is not always running during vehicle operation. If the engine is stopped for a sufficiently long period during the operation of the vehicle, the exhaust system catalyst may cool down too much, and to such a degree that a temporary, but significant increase in exhaust emissions occur upon restart and until the catalyst once again warms to its effective temperature.

In another aspect, the battery state-of-charge (SOC) in a hybrid electric vehicle is typically controlled using SOC feedback control. When applying SOC feedback control, however, and when the vehicle is operating in a low velocity region, the SOC feedback control tends to grow unstable as velocity increases. Instability also occurs when the vehicle is operating at high velocity and the velocity of the vehicle then decreases. The same instability or weakness can still occur even when using "feed-forward" type estimating of required tractive force; the same being a typical complement to SOC feedback control. This is particularly true at low vehicle velocities with velocity increases and at high vehicle velocities with velocity decreases. Even when properly designed, the SOC feedback control can also be weak at full take-off.

In a typical power-split hybrid electric propulsion arrangement, the control strategy advantageously involves operating the engine along optimum efficiency torque vs. speed curves. A trade-off exists between traction force performance and fuel economy which, for optimization, typically requires selection of a particular gear ratio between the engine and the wheels that causes the engine to deliver more power than is needed for vehicle propulsion. This generally occurs at cruising in parallel mode, or near constant vehicle velocity conditions. Operation under these conditions can, sometimes, cause the battery and charging system to reject energy being presented thereto from the engine. This problem is generally solved by decreasing or limiting the engine output power by entering negative split mode which entails using the generator as a motor to control the engine to a decreased speed. Such control allows the engine to follow an optimum curve at reduced engine output power.

Use of the generator as a motor gives rise to a power circulation in the power-train which leads to undesirable energy losses at the generator, motor, inverters and/or planetary gear set. These energy losses may be manifest as heat generation which indicates that most efficient use is not being made of the installed drive train.

In a power-split hybrid propulsion system having planetary gear set(s) and utilizing a generator lock-up device, a harshness in ride occurs when the generator lock-up device is engaged or released. This is due primarily to the difference in how engine torque is estimated when the vehicle is in different operating modes. Typically, when the generator is locked up, engine torque is estimated from the combustion control process of the engine. When the generator is free, as in split mode, however, engine torque is estimated from the generator torque control process. The difference in values of these two estimating techniques gives rise to what usually amounts to a variation in operating torque between the engine and generator when the lock-up device is engaged or disengaged, thereby creating harshness in the vehicle's operation, usually manifest as abrupt changes or jerkiness in the vehicle's ride.

As earlier indicated, the generator is typically used to control the engine in power-split hybrid mode. This is usually accomplished by employing a generator having maximum torque capabilities substantially greater than the engine's maximum torque that is transmittable to the planetary gear system. Failure to have such a control margin can result in generator over-speed and possible damage to the propulsion system. Such a control margin means, however, that the engine and generator are not fully exploited at full capacity acceleration.

It is an object of this invention to provide an improved method for use in a hybrid electric vehicle.

According to a first aspect of the invention there is provided a method for calibrating and synchronising sensed operating torques of an engine and a generator in a planetary gear based hybrid electric vehicle characterised in that the method comprises providing a sensor that detects the operational torque of the engine of the hybrid electric vehicle at the interface of the engine with a planetary gear system of the hybrid electric vehicle, providing a sensor that detects the operational torque of the generator, operating the planetary gear system of the hybrid electric vehicle in a split mode so that the generator is directly linked to the engine and a reading of the sensor that detects the operational torque of the generator may be used to compute the operating torque of the engine recording paired values of sensed operational torques of said engine and said generator at like times, arithmetically processing each pair of recorded values and computing a calibrating value therebetween, repeating the sensing and recording of paired values at the same sensed generator and engine speeds and torques thereby enabling the calculation of computed average calibrating values at each of the particular sensed generator speeds suitable for subsequent utilisation in computing corresponding engine torques in the future and controlling the engine and the generator utilizing the average calibrating value at future times of transition between power-split mode and parallel mode of the planetary gear system so that the engine is substantially synchronized with the generator at the time of direct linkage across the planetary gear arrangement thereby avoiding driver detectible irregularities in the performance of the power train of the hybrid electric vehicle.

Preferably, a plurality of calibrating values may be considered so that different calibration factors can be obtained for different operation points for the engine and generator thereby maximising the predictive quality of the average calibrating factor.

The relationship between the engine and generator in the split mode may be based on gear ratios that are substantially unchanging.

The method may further comprise recording contemporaneous values of complementary operating parameters of the hybrid electric vehicle for each pair of recorded values of sensed operational torques of said engine and said generator at specific times.

The method may further comprise permitting the average calibration value to be varied by a limited maximum value with respect to time so that anomalous disturbances do not significantly impact the computed average calibration value.

The method may further comprise continuously updating the computed average calibration value for a particular generator sensed torque thereby continuously improving the quality of the average calibration value for that particular generator sensed torque.

The irregularities to be avoided may be manifest as jerking motions induced in the hybrid electric vehicle by the planetary gear system.

The method may further comprise enabling customisation of the computed average calibration value to an individual vehicle.

According to a second aspect of the invention there is provided a hybrid electric vehicle having an internal combustion engine, an electric motor, an electric generator, a planetary gear system and at least one electronic controller to control operation of the hybrid electric vehicle characterised in that the vehicle further comprises a sensor to detect the operational torque of the engine at the interface of the engine with the planetary gear system, a sensor to detect the operational torque of the generator, operating the planetary gear system in a split mode so that the generator is directly linked to the engine and a reading of the sensor that detects the operational torque of the generator may be used to compute the operating torque of the engine, electronically storing in one of said controllers paired values of sensed operational torques of said engine and said generator at like times, at least one controller being operable to arithmetically process each pair of recorded values and compute a calibrating value therebetween, repeating the sensing and recording of paired values at the same sensed generator and engine speeds and torques thereby enabling the calculation of computed average calibrating values at each of the particular sensed generator speeds suitable for subsequent utilisation in computing corresponding engine torques wherein at least one controller is operable to control the engine and the generator by utilising the average calibrating value during transition between a power-split mode and a parallel mode of operation of the planetary gear system so that the engine is substantially synchronised with the generator at the time of direct linkage across the planetary gear arrangement thereby avoiding driver detectible irregularities in the performance of the power train of the hybrid electric vehicle.

The invention will now be described by way of example with reference to the accompanying drawing of which:-
In the following, the invention will be described in greater detail by way of examples and with reference to the attached drawings, in which:
   Figure 1 is a graphical comparison of torque generated by a parallel hybrid and systems that have either an engine or motor;
   Figure 2 is a perspective of a hybrid electric vehicle showing system component locations on the vehicle;
   Figure 3 is a schematic depicting the architecture of a power-split hybrid electric vehicle;
   Figure 4 is a cross-sectional schematic representation of a planetary gear set;
   Figure 5 is a simplified schematic view of a one-way clutch shown in Figure 2;
   Figure 6 is a schematic depicting control relationships between the various systems of a hybrid electric vehicle as coordinated utilizing a controller area network;
   Figure 7 is a functional schematic depicting the specific processes, tasks and controls of the various systems used by a hybrid electric vehicle in accordance with this invention;
   Figure 8a is a schematic horizontal cross-sectional view of a battery for a hybrid electric vehicle;
   Figure 8b is a schematic horizontal cross-sectional view of a traditional battery having cylindrically-shaped cells;
   Figure 8c is a schematic vertical cross-sectional view of a battery cooling system as depicted in Figure 8a;
   Figures 9 and 10 schematically illustrate a method for minimizing driver perceptible drive train disturbances during take-off in a hybrid electric vehicle;

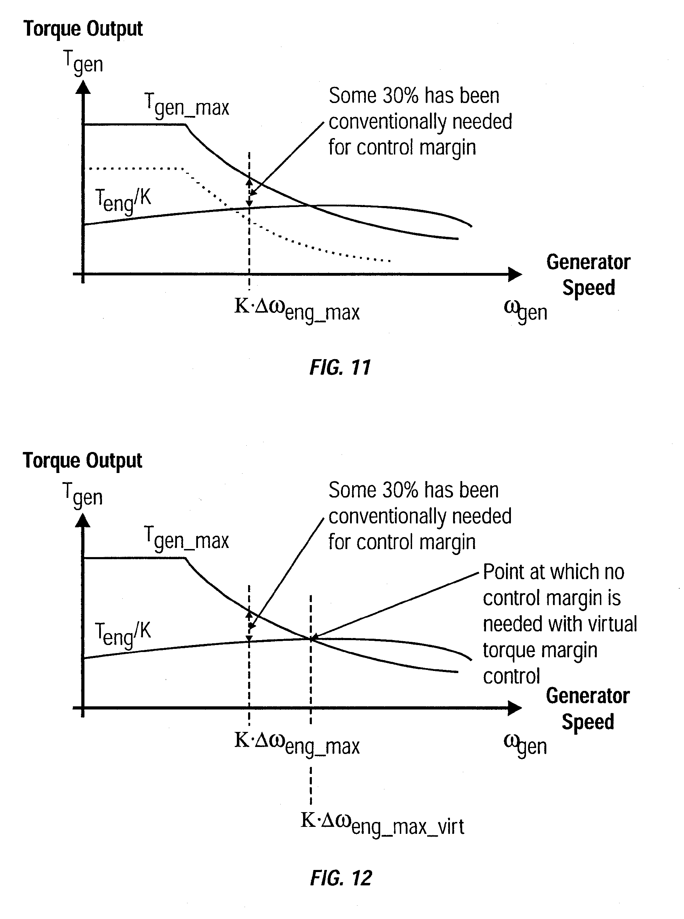

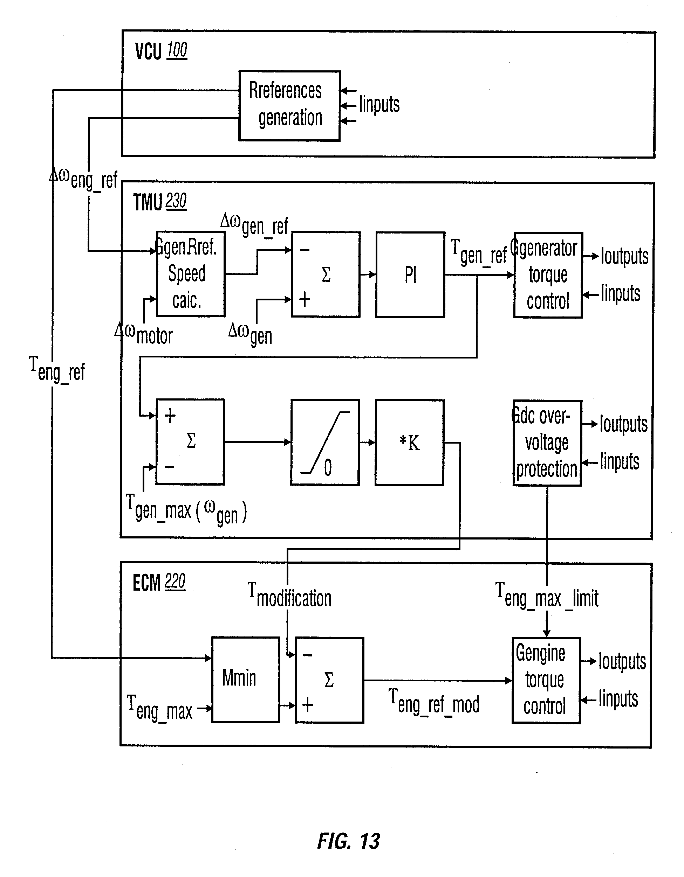

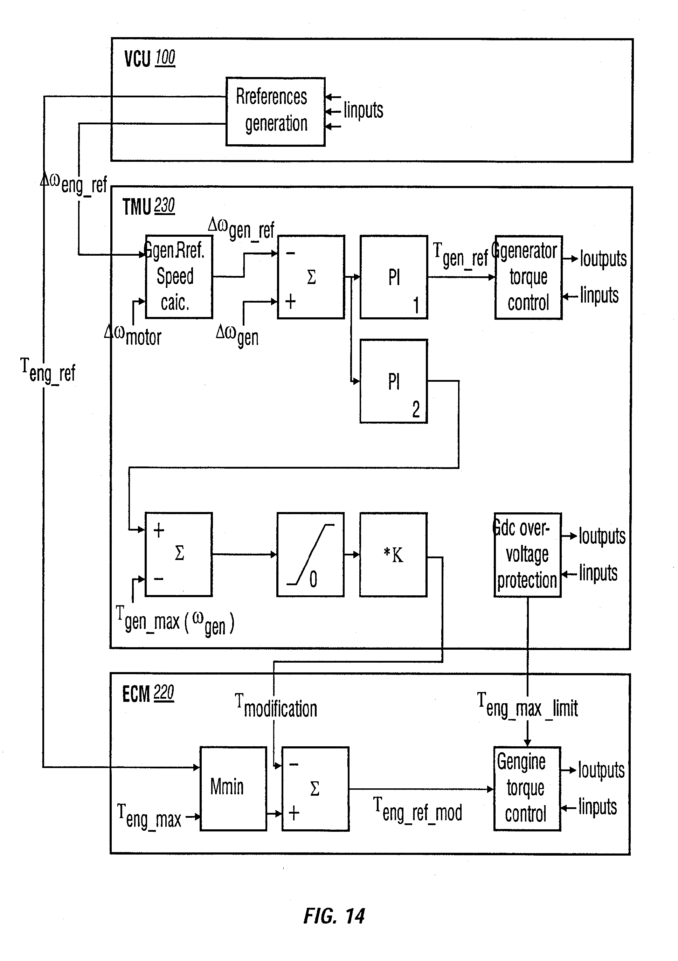

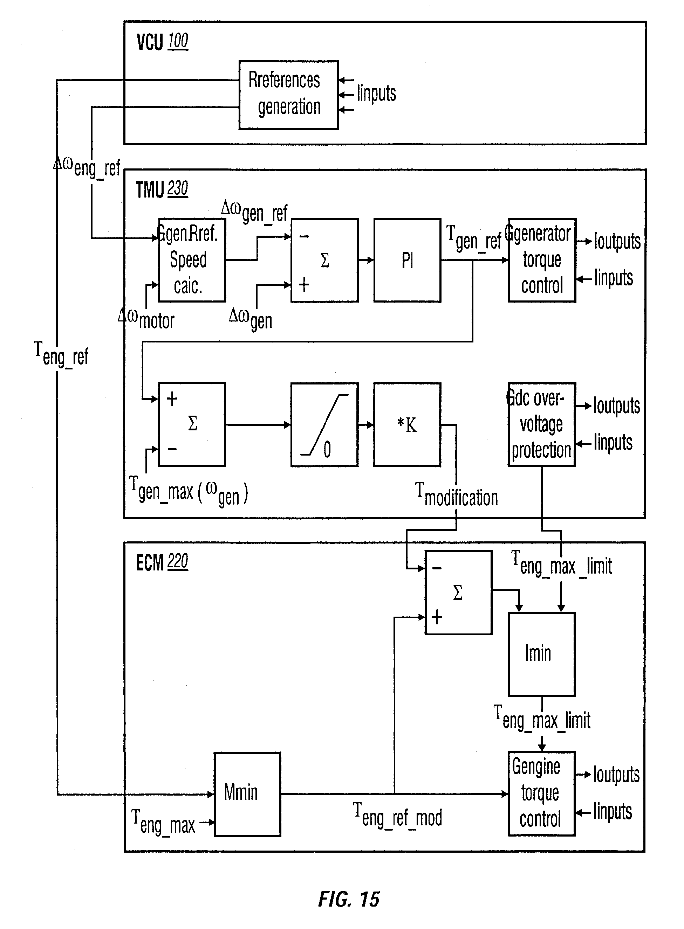

   Figures 11 through 15 schematically illustrate a method for maximising the utilisable torque output of a particularly sized engine in a hybrid electric vehicle.

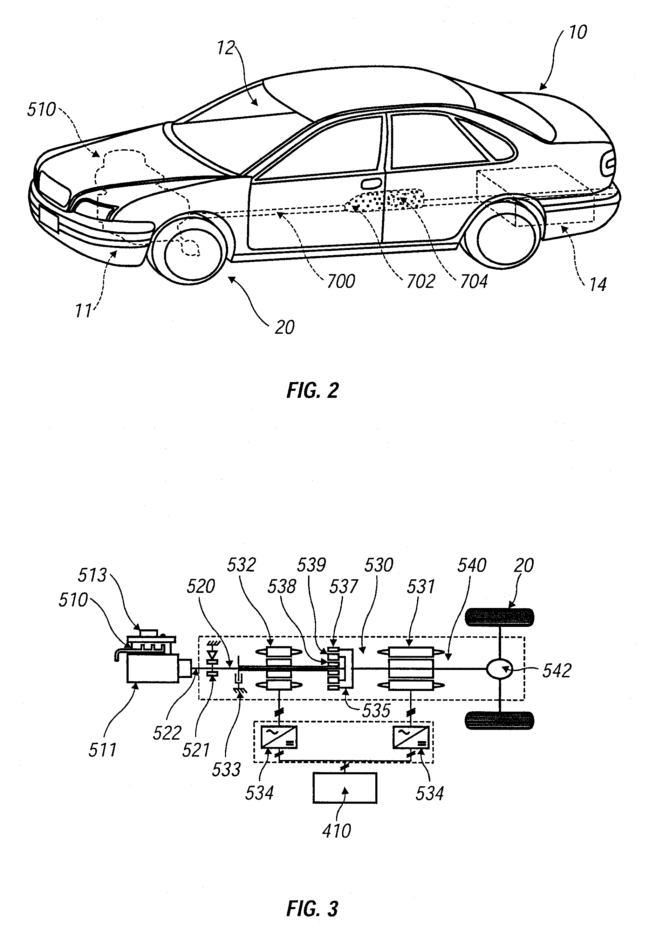

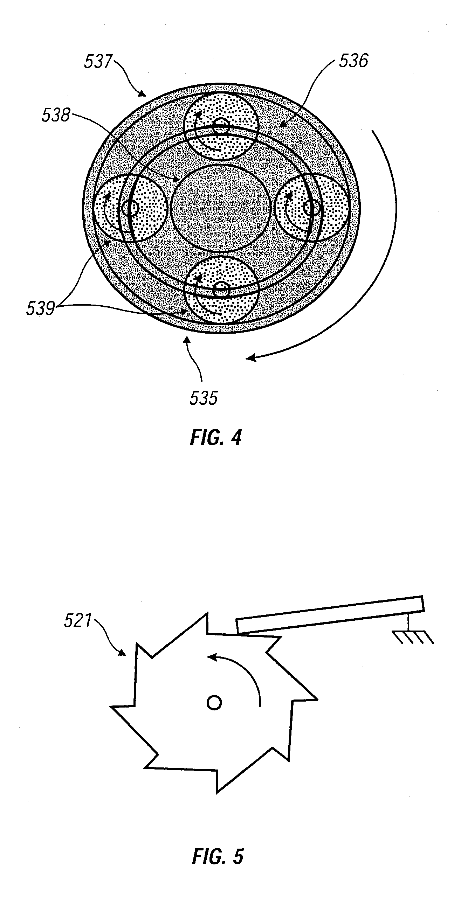

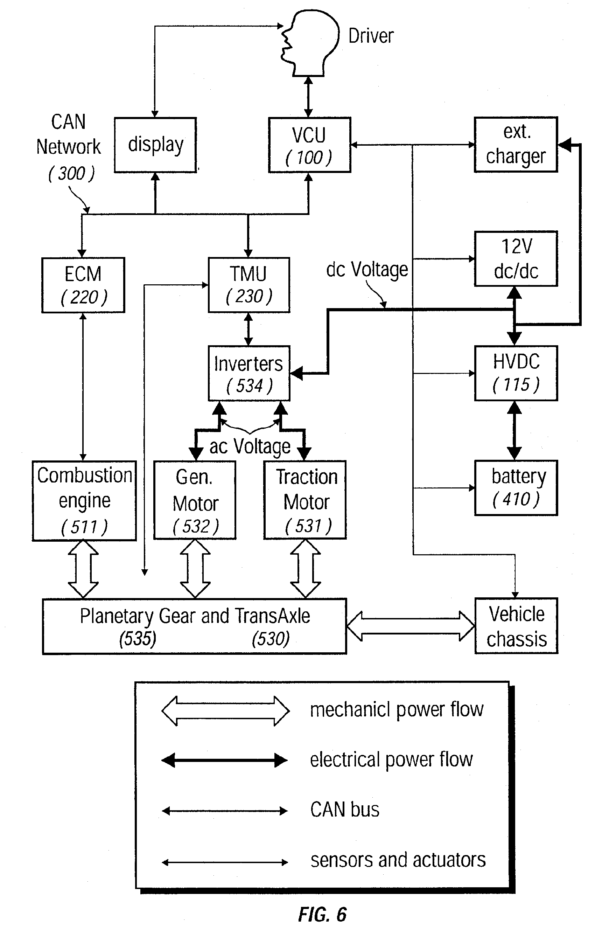

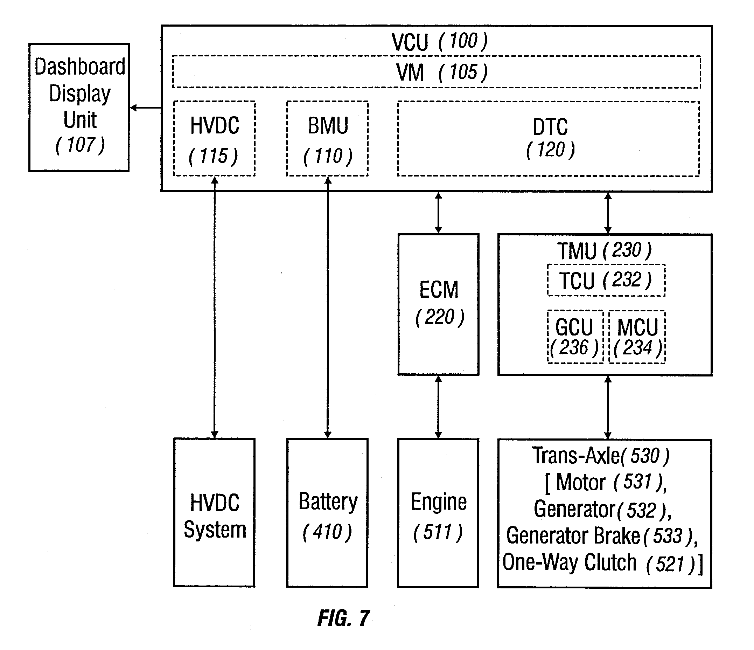

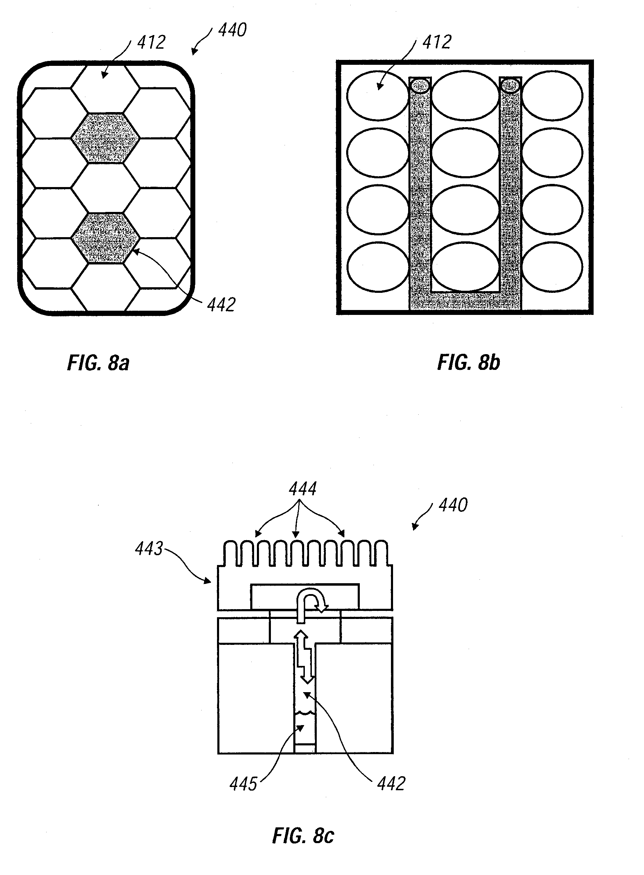

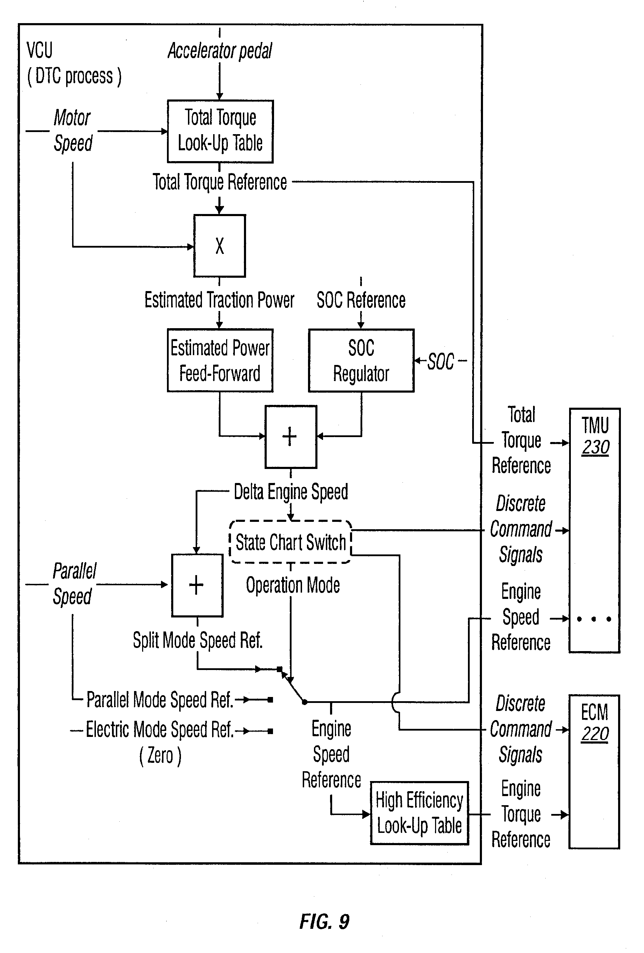

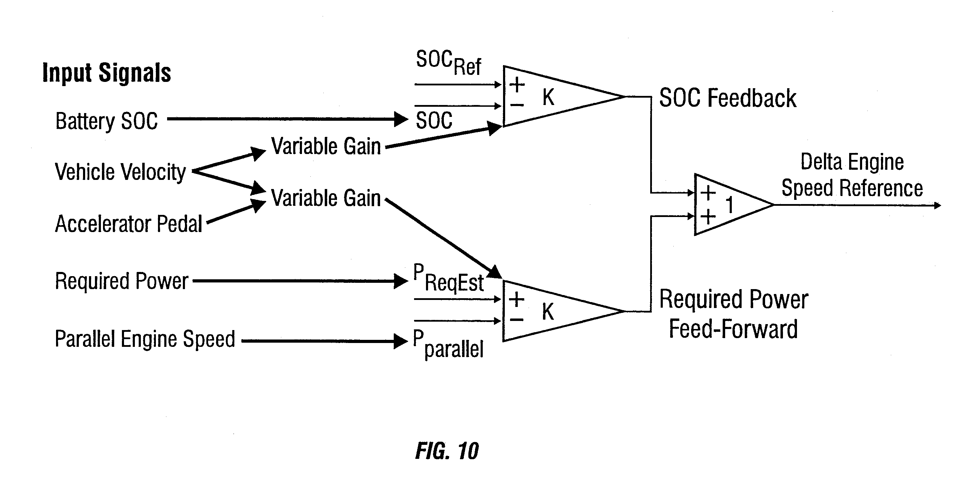

   As shown in Figures 1 and 2, a hybrid electric transporting vehicle 10 has a power train system having components generally designated with reference numbers from the 500's series included therein for providing propulsion, as well as serving supplemental functions which are described in greater detail herein.
   The power train system is positioned in an engine room 11 located near a passenger compartment 12 of the vehicle 10. A battery compartment or housing 14, also positioned near the passenger compartment 12 holds one or more batteries 410. As will be appreciated by those skilled in the art, the positioning of both the engine room 11 and battery housing 14 is not limited to the locations set forth in Figure 2. For example, either may be positioned in front of, or behind the passenger compartment 12.
   As depicted in Figure 2, the overall systems architecture of the electric hybrid vehicle 10 comprises an engine system 510, including an internal combustion engine 511 that is mechanically connected by an output shaft system 520 to a transaxle system 530.
   The transaxle system 530 is further connected to a drive shaft system 540 utilized to rotate one or more drive wheels 20 that propel the hybrid electric transporting vehicle 10.
   The combustion engine 511 is controlled by an engine control module (ECM) or unit 220 which is capable of adjusting, among possible parameters, airflow to, fuel flow to and/or ignition at the engine 511. The engine 511 is mechanically connected via an output shaft 522 to the transaxle system 530. A planetary gear set 535 establishes interconnection between the engine 511 via the output shaft 522, a generator 532, and the drive shaft system 540 via the transaxle system 530. A motor 531 is also coupled to the drive shaft system 540, also possibly via the transaxle system 530.
   In the embodiment shown in Figures 3 and 5, a one way clutch 521 is engageable with the output shaft 522, which in turn is connect to the engine 511 and to the planetary gear set 535. The function of the one-way clutch 521 is to limit the engine to being only a power/torque input to the planetary gear set 535, and with only one direction of rotation. Consequently, the one-way clutch 521 prevents power or torque from being transmitted from the planetary gear set 535 back to the engine 511.
   As shown in Figure 4, the planetary gear set 535 comprises a plurality of concentrically positioned planet gears 539 mechanically engaged between a perimeter region of a centrally located sun gear 538 and an interior surface of a ring gear 537. The individual gears that make up the plurality or set of planet gears 539 are fixed in positions relative to each other by a planetary carrier 536.
   The generator 532 is mechanically connected to the sun gear 538 and is configured to convey rotational power and torque to and from the planetary gear set 535. In a preferred embodiment, the generator 532 is capable of being locked to prevent rotation of the sun gear 538 by a generator brake or lock-up device 533. As further contemplated by the present invention, the motor 531 is mechanically connected to the ring gear 537 and is configured to convey rotational power and torque to and from the planetary gear set 535.
   In a preferred embodiment shown in Figure 3, the drive shaft system 540 is engageable with the motor 531 and effectively terminates at the drive wheel 20, via a conventionally configured transmission/differential arrangement 542.
   Based on the above disclosed system architecture, implementation of an energy management strategy, which is a focus of the hybrid electric vehicle 10, starts at a high level within a vehicle control unit or vehicle systems controller (VCU)100 as schematically shown in Figures 6 and 7.
   The vehicle systems controller 100 is programmed with control strategies for the drive train system and battery system, as well as others and is responsible for interpreting driver inputs, coordinating the component controllers, and determining vehicle system operating states.
   The VCU 100 also generates commands to appropriate component sub-systems based on defined vehicle systems controller 100 functions, and sends those commands to the component controllers that, based thereon, take appropriate actions and acts as a reference signal generator for the sub-system controllers.
   The vehicle systems controller 100 may take the form of a single, integrated microprocessor, or comprise multiple microprocessors or controllers that are suitably interconnected and co-ordinated.
   A primary function of the vehicle systems controller 100 is to carry out vehicle mode processes and tasks known as the sequential control process this is in addition to making torque determinations, setting reference values and performing energy management processes. Certain systems of the vehicle 10 are managed or monitored by a vehicle management (VM) unit or controller 105 which carries out sequential control processes, including ascertaining the position of the vehicle key and gear selector positioning, among others. It is at this level that certain inputs from the driver and conditions of the vehicle are synthesized for utilization as command inputs for sub-system controllers.
   At the lower level of the VCU 100, three sub-component controllers are illustrated in Figure 7. The first is a high voltage DC controller (HVDC) 115; the second is a battery management unit or controller 110 (BMU); and the third is a drive train controller 120 (DTC). As indicated above, certain inputs and processes are taken from the driver and the vehicle's systems at the vehicle management unit 105. Conversely, certain outputs relevant to the driver will be transmitted and displayed at the dashboard display unit 107 from the VCU 100 or the VM 105.
   The HVDC 115 is responsible for coordinating operation of the high voltage components. The positioning of this controller is schematically shown in Figure 6. The HVDC contains contactors or breakers which are normally positioned to an open configuration that prevents electricity from flowing across. But when called on to take action and engage the battery 410, for instance when starting of the engine 511 is required, these contactors close completing an appropriate connective circuit.
   As shown in Figure 6, the HVDC serves as a shield or buffer between the high voltage battery 410, and the inverters 534, as well as other auxiliary loads run off of the electric power of the battery 410. An example of such a high voltage auxiliary load may include an electrically run air-conditioning compressor system. In order to act as such a buffer, the high voltage output from the battery 410 must be relatively slowly "brought-up" to operating levels at the inverter 534 and/or auxiliary loads. In order to accept this "run-up" of the voltage, relatively small capacity contactors are initially closed that cause voltage from the battery to pass to a capacitor in either the inverter 534 or the appropriate auxiliary load, across a resistive circuit (a circuit containing buffering resistors). Once an appropriate pre-charge is built-up in the capacitor, primary contractors are then closed which complete the high voltage circuit between the batteries 410 and the capacitor contained within the receiving component which may be exemplified by the DC to AC inverter(s) 534, or an auxiliary load such as an electric air-conditioning system as indicated hereinabove. In this manner, a potentially damaging high voltage is prevented from being introduced too quickly to the receiving components.
   The HVDC 115 also carries out certain diagnostic functions regarding the components of the HVDC 115, such as the contactors within the HVDC 115 itself, and also possibly the several systems interconnected through the HVDC, such as the battery 410, the inverters 534, or an electrically driven air-conditioning compressor which has not been illustrated in the Figures. Among other parameters, these diagnostics may be performed based on measurements of voltage and/or current.
   The HVDC 115 also provides interconnection between an exterior charger connection, see Figure 6, thereby allowing the battery 410 to be "plugged-in" for charging from an external power source.
   The battery management controller (BMU) 110 handles control tasks relative to the battery system 410. Among other characteristics, the BMU 110 can estimate and measure state-of-charge (SOC) levels, and voltage and current parameters. It can also sense/determine and maintain maximum and minimum voltage and current levels with respect to the battery 410. Based on these determinations or sensed quantities/qualities, the VM 105 , via such control modules as the DTC 120, can direct certain operations for affecting changes in the SOC of the battery 410. Other characteristics which may be monitored include operating temperature(s) of the battery 410, and voltages at the individual battery cells 412. Similarly, pressure within the cells 412 can also be monitored. Failures may be detected and reported, at least back to the VCU; but there is also the possibility of the information being passed to the operator via the dashboard display unit 107.
   The DTC 120 makes the mode selection under which the several powering components will cooperate. That includes choices between parallel and split modes, as well as positive and negative split modes. The operational points for the several components of the drive train are also specified by the DTC 120. Still further, reference values are provided by the DTC 120 for the several sub-sytems, including the transaxle management control modules or unit (TMU) 230 and the engine control module or unit (ECM) 220. From among the possible settings established by the DTC 120, battery charging/discharging mode is a possibility, as well as specifying whether the generator 532 and/or motor 531 should be used in their powering capacity as a motor, or their generating capacity as a generator. Torque references for the generator and motor are also issued from the TMU 230.
   As a sub-component under the TMU 230, the transaxle control unit TCU 232 handles the transaxle 530 with respect to torque compensation when starting and stopping the engine 511. The TCU 232 uses and controls two slave processors characterized as a generator control unit GCU 236 and a motor control unit MCU 234. The GCU 236 handles the current and torque control of the generator 532; typically, via the inverter 534. The GCU 236 receives its torque and speed reference information from the TCU 232 as its immediate controller. The TCU 232 receives a total torque reference for the transaxle 530 and the speed reference value for the engine 511, together with mode reference information regarding cooperation between the engine 511 and generator 532; such as, whether parallel-, positive-split, or negative-split mode configurations will be assumed. The TCU 232 generates the torque reference parameters for the generator 532 and motor 531, each of which are implemented under the control of the GCU 236 and MCU 234, respectively. The specified torque settings are accomplished by controlling the current provided to the respective generator/motor controllers 236,234.
   Based on a map of optimal engine torque vs. speed curves, engine speed and torque are selected by the DTC 120 so that the engine system 510 can deliver the desired engine power and simultaneously lie on one of the engine's optimized efficient curves. If the DTC 120 determines that the speed of the engine 511 is too low for efficient operation, then the engine 511 is turned (or left) off by the engine control unit 220. If the power train control module 120 determines that the speed of the engine 511 is too high to be controlled by the generator 532 (based on SOC and generator limitations), the engine 511 is set to a slowed operational speed by the ECM 220.
   Once the speed, torque and power of the engine 511 are determined by the vehicle systems controller 100, particularly at the DTC120 of the controller 100, then the DTC 120 further determines the required speed and torque of the generator 532 to control the engine 511. The DTC 120, using this information, then determines the required speed and torque of the motor 531 to meet the difference, if any, between driver power (torque) demand and the engine power (torque).
   Torque determination and monitoring is also carried out at the VCU 100. This function further ensures that torque delivered to the drive wheel(s) 20 is substantially equal to the torque (acceleration) demanded by the driver. The VCU 100 also monitors and controls the torque from the engine 511 and transaxle system 530 by comparing a sensed torque against the torque demanded by the driver. Torque management by the VCU 100 interprets driver inputs and speed control demands to determine regenerative brake torque and desired output shaft torque.
   From the VCU 100, commands and references are distributed over a controller area network (CAN) 300 to component controllers generally referenced herein utilizing reference numbers in the 200's series. As indicated above, these controllers include the ECM 220 and the TMU 230 that together control the power train system to achieve efficient energy management, partition torque, determine engine 511 operating point(s), and decide on, and coordinate engine 511 start/stops. Commands and references from the VCU 100 to a series regenerative brake controller determine regeneration torque limitations, desired regenerative torque and zero vehicle speed control.
   Finally, if and/or when individual system components are rendered inoperative, such as the motor 531 becomes disabled, the VCU 100 is configured to provide limited operating control over the power train system to allow the hybrid engine vehicle 10 to "limp" home.
   As shown in Figure 8a, the vehicle 10 may use several novel compact battery systems 400. Each is made up of a number of elongate battery cells 412, each cell 412 having a longitudinal axis and a hexagonal cross-section shape in a plane oriented substantially perpendicular to the longitudinal axis. The plurality of cells 412 are arranged in a honeycomb configuration with opposed faces of adjacent cells 412 proximately located one to the other in face-to-face relationship. One or more hexagonally shaped cooling channels 442 are located at interior locations amongst the plurality of battery cells 412. A thermally radiating cap 443 is in fluid communication with one or more of the cooling channels 442 which is filled with a cooling fluid 445 that circulates between the cap 443 and the channels 442 to cool the battery cells 412.
   This type of battery is more compact than the conventional battery shown in Figure 8b.
   To further promote cooling, the radiating cap 443 may be configured with a plurality of fin-type members 444 that extend from an exteriorly exposed surface thereof for enhancing thermal discharge of heat from the cap 443 to air circulated across the fins 444.
   The hybrid vehicle includes various other novel features one of these is a method for maximising the engine's 511 power contribution to the hybrid electric vehicle's 10 performance in a take-off operating condition.
   The method includes initiating take-off acceleration of the vehicle 10 exclusively using the motor 531, predicting the future demand for an engine's 511 power contribution to the vehicle's 10 immediate future power demand during the take-off acceleration, and starting the engine 511 at the time that the determination is made of future demand for the engine's 511 power contribution during the take-off acceleration.
   The vehicle is includes a process or method for maintaining a catalyst 702 of an emissions system 700 in a hybrid electric propulsive system in an operative state.
   The method calls for sensing that the engine 511 has stopped operating, predicting a time period after which the catalyst 702 will cool down below a temperature known as a light-off temperature at which the catalyst becomes ineffective and restarting the engine 511 when the time period has expired or lapsed, thereby maintaining the catalyst 702 at temperatures in excess of the light-off temperature, regardless of whether power is need from the engine 511 at that time.
   A method for minimizing driver perceptible drive train disturbances during take-off driving is also used in the hybrid electric vehicle 10 the concepts of this method are illustrated specifically in Figures 9 and 10. The method includes sensing an actual state-of-charge (SOC) value of the battery 410 and the velocity of the vehicle 10 during take-off operation. The sensed actual SOC value is compared with a SOC reference value and a delta SOC value is computed as a difference therebetween. A velocity-based SOC calibration factor corresponding to the velocity of the vehicle 10 is obtained from a look- up table maintained in the control system. A combination of the delta SOC value and the SOC calibration factor are utilized as a SOC feedback engine speed control instruction to the engine control unit (ECM) 220 of the hybrid electric vehicle 10.
   A method for optimising the operational efficiency of a hybrid electric vehicle 10 is also used by the vehicle 10. The method includes operating the engine 511 of a hybrid electric vehicle 10 preferentially on an optimized power curve of the engine 511 for maximizing the efficiency of the engine 511. But when cruising in a state where no battery charging is required, reducing the running torque of the engine 511 in parallel mode to a level below the optimised torque curve to a point that the power produced by the engine 511 is substantially equal to the power demanded for driving the hybrid electric vehicle 10.
   The vehicle further includes a method for calibrating and synchronizing sensed operating torques of the engine 511 and the generator 532 in a planetary gear based hybrid electric vehicle 10 in accordance with this invention.
   The method includes providing a sensor that detects the operational torque of the engine 511 at the interface of the engine 511 with the planetary gear system 535 of a power-split hybrid drive train of the hybrid electric vehicle 10.
   A sensor is provided that detects the operational torque of the generator 532 at its interface with the planetary gear system 535 of the hybrid electric vehicle 10.
   The planetary gear system 535 of the hybrid electric vehicle 10 is operated in the split mode so that the generator 532 is directly linked to the engine 511 and a reading of the sensor that detects the operational torque of the generator 532 may also be used to compute the operating torque of the engine 511. Paired values of sensed operational speeds of the engine 511 and the generator 532 at like times are recorded. Each pair of recorded values is arithmetically processed and a calibrating value therebetween is computed.
   The sensing and recording of paired values at the same sensed generator and engine operation points is repeated thereby enabling the calculation of computed average calibrating values at each of the particular sensed generator and engine speeds and torques suitable for subsequent utilization in computing correlating engine torques in the future.
   The engine 511 and the generator 532 are controlled utilizing the average calibrating value at future times of transition between power-split mode and parallel mode of the planetary gear system 535 so that the engine torque is substantially matched with the generator torque at the time of direct linkage across the planetary gear arrangement such as when releasing generator lock-up, thereby avoiding driver detectible irregularities or harshness in the performance of the power train of the hybrid electric vehicle 10.
   The predictability of the relationship between the engine 511 and generator 532 in the parallel mode is based on gear ratios that remain substantially unchanging.
   Contemporaneously measured values of complementary operating parameters of the hybrid electric vehicle 10 may also be recorded for each pair of recorded values of sensed operational torques of the engine 511 and the generator 532 to be used supplementally in the torque matching process.
   To maintain trueness, the average calibration value is permitted to be varied by a limited maximum value with respect to time so that anomalous disturbances do not significantly impact the computed average calibration value. The updating of the computed average calibration value for a particular generator sensed speed is on-going, and continuous thereby continually improving the quality of the average calibration value for that particular generator sensed speed.
   The irregularities to be avoided are manifest as jerking motions induced in the hybrid electric vehicle 10 by the planetary gear system 535.
   Customisation of the computed average calibration value to an individual vehicle is enabled via the invention in the presently disclosed embodiment since histories are taken, maintained, and considered in the matching process. That is to say the system is operable to be able to use historic data to improve the accuracy of control.
   The vehicle also includes a method for maximising the utilisable torque output capacity of the hybrid electric vehicle 10. The method includes controlling operation of the engine 511 of the hybrid electric vehicle 10 using the generator 532, the engine 511 and generator 532 being interconnected through the planetary gear system 535. The generator 532 has approximately equal torque output capacity as the engine 511 when connecting gear ratios are considered. An engine controller 220 is utilised to manage the engine's 511 operation thereby permitting the engine 511 to be operated at a torque output level substantially equal to the maximum torque output of the generator 532 without a significant margin of excess control capacity of the generator 532 over the engine 511. An overpower condition is detected in which the torque output of the engine 511 is surpassing the maximum torque output of the generator 532. Responsively, the engine 511 is controlled to a torque output that is less than the maximum torque output of the generator 532.
   The method continues by rechecking for a continuation of the engine overpower condition and shutting the engine 511 down if the control actions are not sufficient and a continuing overpower condition is detected. In this manner, generator and engine over-speed is avoided.
   By this process, total utilizable capacity of the power plant is optimized by enabling running the engine 511 at substantially maximum capacity where greatest torque is produced therefrom.
   It will be appreciated that the invention has been described with respect to a specific embodiment and that various alternative embodiments could b constructed or modification be made without departing from the scope of the invention.

## Claims

1. A method for calibrating and synchronising sensed operating torques of an engine (511) and a generator (532) in a planetary gear based hybrid electric vehicle (10) **characterised in that** the method comprises providing a sensor that detects the operational torque of the engine (511) of the hybrid electric vehicle (10) at the interface of the engine with a planetary gear system (535) of the hybrid electric vehicle (10) providing a sensor that detects the operational torque of the generator (532), operating the planetary gear system of the hybrid electric vehicle (10) in a split mode so that, the generator is directly linked to the engine (511), and a reading of the sensor that detects the operational torque of the generator (532) may be used to compute the operating torque of the engine (511) recording paired values of sensed operational torques of said engine (511) and said generator (532) at like times, arithmetically processing each pair of recorded values and computing a calibrating value therebetween, repeating the sensing and recording of paired values at the same sensed generator and engine speeds and torques thereby enabling the calculation of computed average calibrating values at each of the particular sensed generator speeds suitable for subsequent utilisation in computing corresponding engine torques in the future and controlling the engine (511) and the generator (532) utilizing the average calibrating value at future times of transition between power-split mode and parallel mode of the planetary gear system (535) so that the engine is substantially synchronized with the generator (532) at the time of direct linkage across the planetary gear arrangement thereby avoiding driver detectible irregularities in the performance of the power train of the hybrid electric vehicle (10).

2. A method as claimed in claim 1 wherein a plurality of calibrating values are considered so that different calibration factors can be obtained for different operation points for the engine (511) and generator (532) thereby maximizing the predictive quality of the average calibrating factor.

3. A method as claimed in claim 1 or in claim 2 wherein the relationship between the engine (511) and generator (532) in the split mode is based on gear ratios that are substantially unchanging.

4. A method as claimed in any of claims 1 to 3 further comprising recording contemporaneous values of complementary operating parameters of the hybrid electric vehicle for each pair of recorded values of sensed operational torques of said engine (511) and said generator (532) at specific times.

5. A method as claimed in any of claims 1 to 4 further comprising permitting the average calibration value to be varied by a limited maximum value with respect to time so that anomalous disturbances do not significantly impact the computed average calibration value.

6. A method as claimed in any of claims 1 to 5 further comprising continuously updating the computed average calibration value for a particular generator (532) sensed torque thereby continuously improving the quality of the average calibration value for that particular generator sensed torque.

7. A method as claimed in any of claims 1 to 6 further comprising enabling customisation of the computed average calibration value to an individual vehicle.

8. A hybrid electric vehicle (10) having an internal combustion engine (511), an electric motor (531), an electric generator (532), a planetary gear system (535) and at least one electronic controller ( 100, 220, 230) to control operation of the hybrid electric vehicle (10) **characterised in that** the vehicle (10) further comprises a sensor to detect the operational torque of the engine (511) at the interface of the engine (511) with the planetary gear system (535), a sensor to detect the operational torque of the generator (532), operating the planetary gear system (535) in a split mode so that the generator is directly linked to the engine (511) and a reading of the sensor that detects the operational torque of the generator (532) may be used to compute the operating torque of the engine(511), electronically storing in one of said controllers paired values of sensed operational torques of said engine (511) and said generator (532) at like times, one of the controllers (100, 220, 230) being operable to arithmetically process each pair of recorded values and compute a calibrating value therebetween, repeating the sensing and recording of paired values at the same sensed generator and engine speeds and torques thereby enabling the calculation of computed average calibrating values at each of the particular sensed generator speeds suitable for subsequent utilisation in computing corresponding engine torques wherein one or more of the controllers (100, 220, 230) are operable to control the engine (511) and the generator (532) by utilising the average calibrating value during transition between a power-split mode and a parallel mode of operation of the planetary gear system (535) so that the engine (511) is substantially synchronised with the generator (532) at the time of direct linkage across the planetary gear arrangement thereby avoiding driver detectible irregularities in the performance of the power train of the hybrid electric vehicle (10).
